# EUROPÄISCHE PATENTSCHRIFT

(11) **EP 1 737 699 B1**
(45) Veröffentlichungstag und Bekanntmachung des Hinweises auf die Patenterteilung: **27.05.2009**
(21) Anmeldenummer: 05733831.1
(22) Anmeldetag: 17.03.2005
(51) Int. Cl.: B60N 2/48, B60R 21/13

(54) **FAHRZEUGSITZ UND CABRIOLETFAHRZEUG MIT EINEM SOLCHEN FAHRZEUGSITZ**
VEHICLE SEAT AND CABRIOLET VEHICLE COMPRISING ONE SUCH SEAT
SIEGE DE VEHICULE ET CABRIOLET POURVU D'UN TEL SIEGE

(30) Priorität: 30.03.2004 DE 102004016180
(43) Veröffentlichungstag der Anmeldung: 03.01.2007
(73) Patentinhaber: Wilhelm Karmann GmbH, 49084 Osnabrück (DE)
(72) Erfinder: FIGENSER, Hanno, 49170 Hagen (DE); BAULE, Rolf-Peter, 49152 Bad Essen (DE)
(86) Internationale Anmeldenummer: PCT/DE2005/000488
(87) Internationale Veröffentlichungsnummer: WO 2005/095152

(56) Entgegenhaltungen:
- EP-A- 0 459 213
- WO-A-01/10669
- DE-A1- 3 621 278
- DE-A1- 3 903 459
- FR-A- 2 814 408
- FR-A- 2 823 164

## Beschreibung

Die Erfindung betrifft einen Fahrzeugsitz mit einer Rückenlehne, insbesondere in Funktion als rückwärtiger Fahrzeugsitz, mit einem am freien Ende der Rückenlehne vorgesehenen Sitzelement, sowie ein Cabrioletfahrzeug mit einem solchen Fahrzeugsitz.

Derartige Fahrzeugsitze sowie Fahrzeuge mit solchen Fahrzeugsitzen sind allgemein bekannt. Bekannt sind ferner Fahrzeugsitze, bei denen ein am freien Ende der Rückenlehne vorgesehenes Sitzelement als Kopfstütze fungiert.

Aus der DE 37 32 562 ist ein Cabrioletfahrzeug mit einem Überrollbügel bekannt, der aus seiner Ruheposition im Bereich einer Hutablage hinter den Fondsitzen, also den rückwärtigen Sitzen, durch eine Schwenkbewegung in seine Wirkposition bewegbar ist. Aus der DE 44 22 550 ist ein Gelenklager für eine solche Schwenklagerung eines Überrollbügels bekannt. Bei einer Schwenkbewegung des Überrollbügels, die vom Fahrzeuglenker aufgrund einer automatischen Auslösung bei einer entsprechenden Ausnahmesituation, z.B. beim Überschlag des Fahrzeuges, nicht beeinflussbar ist, können Verletzungen von Personen, bei denen sich ein Körperteil, wie z.B. der Kopf oder ein Arm im Schwenkbereich befindet, nicht ausgeschlossen werden.

Die DE 39 03 459 schlägt zur Vermeidung dieses Verletzungsrisikos einen Überrollbügel vor, der in seiner Ruhelage in der Rückenlehne des Sitzes oder in einer mit der Rückenlehne verbundenen Kopfstütze angeordnet ist und mit einer translatorischen Bewegung in seine Wirkstellung überführbar ist.

Aus der DE 198 03 398 ist ein Cabrioletfahrzeug bekannt, bei dem hinter den Kopfstützen der Fondsitze als Überrollschutz ein ebenfalls durch eine translatorische Bewegung in seine Wirk- oder Schutzstellung überführbarer Überrollbügel vorgesehen ist.

Aus der DE 38 22 461 ist eine Überrollschutzvorrichtung mit einem hinter dem jeweiligen Fahrzeugsitz angeordneten Überrollbügel bekannt, bei der an dem Überrollbügel ein Kopfstützenpolster angebracht ist.

Die Erfindung besteht darin, einen Fahrzeugsitz oder ein Fahrzeug mit einem solchen Fahrzeugsitz anzugeben, bei dem die Funktion des Überrollschutzes wie auch die Funktion der Kopfstütze von dem gleichen Sitzelement übernommen wird und bei dem zur Verbesserung der rückwärtigen Übersicht das Sitzelement klappbar ausgeführt ist.

Die Erfindung wird mit einem Fahrzeugsitz, insbesondere in Funktion als rückwärtiger Fahrzeugsitz (Fondsitz/Fondsitzanlage), mit einem am freie oberen Ende der Rückenlehne vorgesehenen Sitzelement verwirklicht, bei dem das Sitzelement an einer Lehnenstruktur des Fahrzeugsitzes schwenkbar angelenkt ist und das Sitzelement gleichzeitig als Kopfstütze und als Überrollschutz fungiert.

Die Kombination der Funktionalitäten von Kopfstütze und Überrollschutz in einem klappbaren Sitzelement und dessen Verbindung mit der Lehnenstruktur ist nach bestem Wissen der Anmelderin bisher noch nicht in Betracht gezogen worden. Mit der Erfindung wird ein kostengünstiger und effizienter Insassenschutz möglich. Anders als bei rotatorisch schwenkbaren Überrollbügeln, benötigt das erfindungsgemäße Sitzelement keinen zusätzlichen Platz im Bereich der Hutablage oder dergleichen, Anders als bei dem translatorisch beweglichen Überrollbügel befindet sich das erfindungsgemäße Sitzelement bei besetztem Fahrzeugsitz stets in der Schutzposition, so dass die Schutzfunktion unabhängig von einer korrekten und ausreichend schnellen Auslösung ist, wie sie bei einem beweglichen Überrollbügel erforderlich ist. Die Zusammenfassung mehrerer Funktionalitäten in dem Sitzelement führt zudem zu einer Fertigungsvereinfachung. Das Sitzelement ist zudem auch deshalb einfach und kostengünstig herstellbar, weil keine aufwändige Beweglichkeit für das Erreichen der Schutzposition erforderlich ist.

Vorteilhafte Ausgestaltungen der Erfindung sind Gegenstand der Unteransprüche.

Das Sitzelement ist zur Erfüllung seiner Funktion als Überrollschutz besonders gut geeignet, wenn es ein im Wesentlichen U-förmiges Strukturelement aufweist. Ein solches langgestrecktes umgekehrtes U mit zwei Schenkeln hat sich als besonders gut geeignet erwiesen um die bei einem Fahrzeugüberschlag zu erwartenden Kräfte aufzunehmen und abzuleiten.

Bevorzugt umfasst die Lehnenstruktur zumindest zwei zueinander parallele Tragrohre, wobei jedes freie Ende, also jeder Schenkel des Strukturelements jeweils einem der Tragrohre der Lehnenstruktur derart zugeordnet ist, dass eine Kraftableitung vom Strukturelement auf die Tragrohre der Lehnenstruktur möglich ist.

Zur optimalen Kraftableitung ist weiter bevorzugt vorgesehen, dass die Lehnenstruktur Fahrzeugstrukturseitig angebunden ist, insbesondere indem die Lehnenstruktur mit einer Rohbaurückwand des Fahrzeugs verbunden ist. Die Kraft wird also auf Strukturteile des Kraftfahrzeugs, insbesondere auf die Rohbaurückwand, abgeleitet.

Bevorzugt ist das schwenkbare Sitzelement in einer aufrechten und in einer im Wesentlichen waagerechten Position arretierbar. Die aufrechte Position wird selbstverständlich gewählt, sobald der jeweilige Sitz besetzt ist. Die waagerechte Position kann gewählt werden, wenn der jeweilige Sitz nicht besetzt ist. In der waagerechten Position ist eine rückwärtige Sichtbehinderung des Fahrzeuglenkers durch das umgeklappte Sitzelement vollständig oder zumindest weitestgehend ausgeschlossen. Zudem ergibt sich bei Cabrioletfahrzeugen in der Seitenansicht eine optisch gefällige Linie, wenn bei nicht besetzten Fondsitzen weder eine Kopfstütze noch ein Überrollbügel deutlich über die Fensterbrüstungslinie hinausragt. Dies ist bei dem umgeklappten Sitzelement gewährleistet.

Wenn das schwenkbare Sitzelement in seiner im Wesentlichen waagerechten Position zum Fahrzeuginnenraum geschwenkt ist, belegt das umgeklappte Sitzelement keinen Platz im Bereich einer Hut- oder Verdeckablage oder dergleichen. Zudem kann bei einem "nach vorne" klappbaren Sitzelement der Fahrzeuglenker das Sitzelement unter Umständen von seiner Position vom Fahrersitz aus erreichen und durch eine Bewegung in seine Richtung umklappen. Der Fahrzeuglenker kann also bei einer Sichtbehinderung durch ein auf rechtes Sitzelement reagieren und dieses auch manuell umklappen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: ein Cabrioletfahrzeug in Seitenansicht mit einem aufrechten Sitzelement am Fondsitz,
- Fig. 2: ein Cabrioletfahrzeug in Seitenansicht mit einem umgeklappten Sitzelement am Fondsitz und
- Fig. 3 und Fig. 4: den Fondsitz als Bestandteil einer Fondsitzgruppe einmal mit einem aufrechten und einmal mit einem umgeklappten Sitzelement.

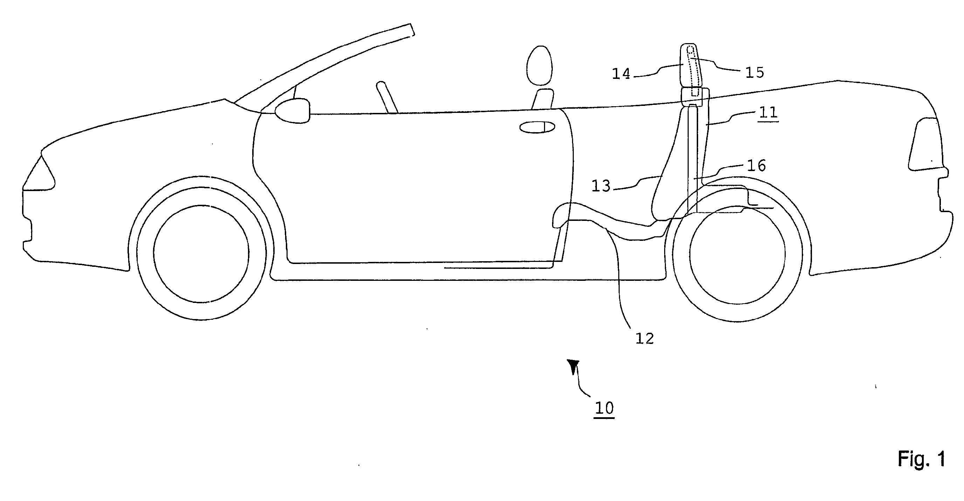

**Fig. 1** zeigt ein Cabrioletfahrzeug **10** in Seitenansicht, wobei ein Fondbereich des Fahrzeugs **10** in Durchsicht dargestellt ist. Im Fondbereich ist ein Fahrzeugsitz **11** gezeigt. Dieser umfasst eine Sitzfläche **12** und eine Rückenlehne **13.** Am freien, oberen Ende der Rückenlehne 13 ist ein Sitzelement **14** vorgesehen, das gleichzeitig als Überrollschutz und als Kopfstütze fungiert. Im Innern des Sitzelements 14 ist im Hinblick auf dessen Funktion als Überrollschutz ein im wesentlichen U-förmiges Strukturelement **15** vorgesehen. Im Hinblick auf die Funktion des Sitzelements 14 als Kopfstütze weist dieses in an sich bekannter Art und Weise eine Polsterung oder eine Umschämung des Strukturelements 15 auf.

Im Innern der Rückenlehne befindet sich ein Lehnenstrukturelement 16. Das Lehnenstrukturelement 16 wird kurz auch als Lehnenstruktur **16** bezeichnet. Das Sitzelement 14 ist an der Lehnenstruktur 16 angelenkt. Das Sitzelement 14 ist damit schwenk- oder klappbar. Des Weiteren ist das Sitzelement 14 mit der Lehnenstruktur 16 derart verbunden, dass im Schadensfall eine Ableitung der am Strukturelement 15 des Sitzelements 14 angreifenden Kräfte auf die Lehnenstruktur 16 gewährleistet ist. Zur weiteren Ableitung der Kräfte ist vorgesehen, dass die Lehnenstruktur 16 mit Strukturteilen des Fahrzeugs 10, also z.B. mit einer Rohbaurückwand, verbunden ist.

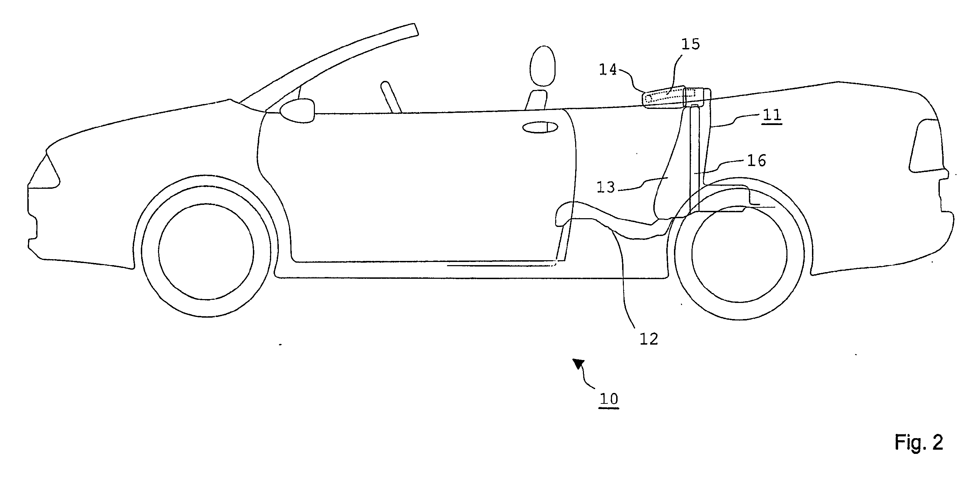

**Fig. 2** zeigt im Wesentlichen die gleiche Darstellung wie Fig. 1. Im Unterschied zu Fig. **1** ist das klappbare Sitzelement 14 zum Fahrzeuginnenraum hin umgeklappt. Das umgeklappte Sitzelement 14 ragt kaum über die Fensterbrüstungslinie des Fahrzeugs 10 hinaus, so sich eine besonders gefällig Seitenansicht des Cabrioletfahrzeugs 10 ergibt.

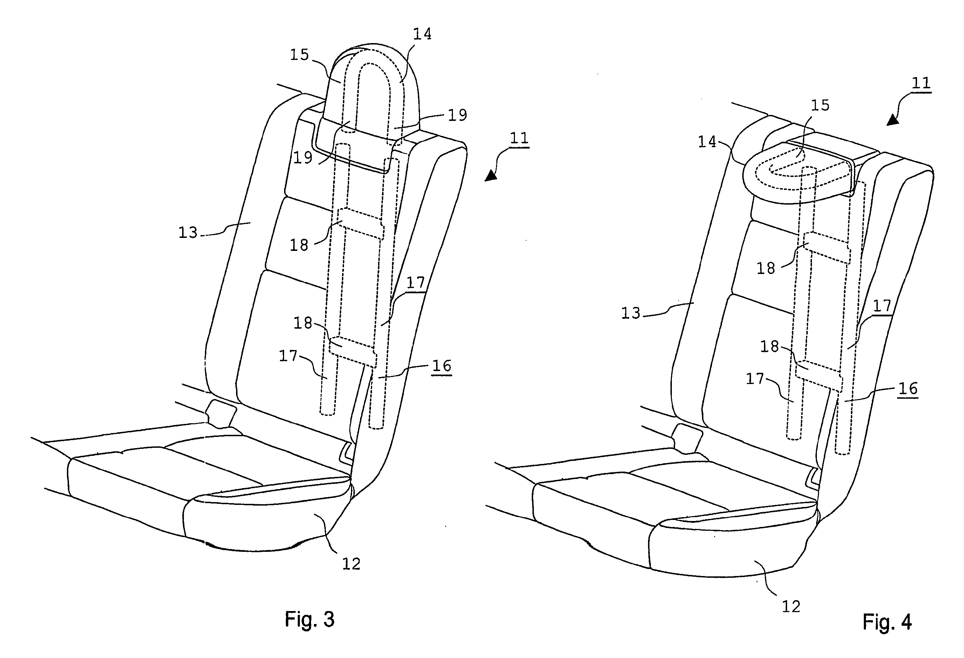

Fig. 3 und Fig. 4 zeigen den Fahrzeugsitz 11 als Fondsitz und als Bestandteil einer Fondsitzgruppe einmal mit einem aufrechten und einmal mit einem umgeklappten Sitzelement 14.

In **Fig. 3** ist der Fahrzeugsitz mit aufrechtem Sitzelement 14 gezeigt. Die Rückenlehne 13 ist in Durchsicht dargestellt, so dass das Lehnenstrukturelement 16 sichtbar ist. Das Lehnenstrukturelement 16 umfasst zwei parallele Tragrohre **17,** die durch Querstreben **18** miteinander verbunden sind. Das Strukturelement 15 in Form eines umgekehrten "U" weist an seinen freien Enden jeweils einen Schenkel **19** auf. Lehnenstruktur 16 und Strukturelement 15 sind zueinander so orientiert, dass die Schenkel 19 in gleicher Linie oder zumindest im Wesentlichen in gleicher Linie mit den Tragrohren 17 der Lehnenstruktur 16 liegen. Auf diese Weise ist eine optimale Ableitung evtl. am Strukturelement 15 angreifender Kraft in die Lehnenstruktur 16 möglich. Zur weiteren Ableitung der Kraft ist die Lehnenstruktur 16 in nicht dargestellter Weise mit tragenden Elementen des Fahrzeugs, z.B. einer Rohbaurückwand verbunden.

**Fig. 4** zeigt im Wesentlichen die gleiche Darstellung wie Fig. 3. Im Unterschied zu Fig. 3 ist das klappbare Sitzelement 14 zum Fahrzeuginnenraum hin umgeklappt. Um die Klappbarkeit des Sitzelements 14 zu realisieren, ist das Sitzelement 14 in nicht näher dargestellter Weise an der Lehnenstruktur angelenkt. Die Anlenkung umfasst z.B. eine Achse, um die die Klapp- oder Schwenkbewegung erfolgt sowie nicht näher dargestellte Mittel zur Arretierung des Sitzelements 14 zumindest in der aufrechten und/oder in der umgeklappten Position. Des Weiteren können (ebenfalls nicht dargestellt) Mittel, z.B. eine Feder oder dergleichen, vorgesehen sein, um das Sitzelement 14 bei gelöster Arretierung entweder in die aufrechte oder die umgeklappte Position zu bewegen.

### Bezugszeichenliste

- 10: Cabrioletfahrzeug
- 11: Fahrzeugsitz
- 12: Sitzfläche
- 13: Rückenlehne
- 14: Sitzelement
- 15: Strukturelement
- 16: Lehnenstruktur, Lehnenstrukturelement
- 17: Tragrohr
- 18: Querstrebe
- 19: Schenkel

## Patentansprüche

1. Fahrzeugsitz (11), insbesondere in Funktion als rückwärtiger Fahrzeugsitz (11), mit einem am freien oberen Ende der Rückenlehne (13) vorgesehenen Sitzelement (14),
**dadurch gekennzeichnet, dass**
das Sitzelement (14) an einer Lehnenstruktur (16)
des Fahrzeugsitzes (11) schwenkbar angelenkt ist und
dass das Sitzelement (14) gleichzeitig als Kopfstütze und als Überrollschutz fungiert.

2. Fahrzeugsitz nach Anspruch 1,
wobei das Sitzelement (14) ein im Wesentlichen U-förmiges Strukturelement (15) aufweist.

3. Fahrzeugsitz nach Anspruch 2,
wobei die Lehnenstruktur (16) zumindest zwei zueinander parallele Tragrohre (17) umfasst und
wobei jedes freie Ende des Strukturelements (15) jeweils einem der Tragrohre (17) der Lehnenstruktur (16) derart zugeordnet ist, dass ein Kraftableitung vom Strukturelement (15) auf die Tragrohre (17) der Lehnenstruktur (16) möglich ist.

4. Fahrzeugsitz nach einem der Ansprüche 2 oder 3,
wobei die Lehnenstruktur (16) Fahrzeugstrukturseitig angebunden ist, insbesondere indem die Lehnenstruktur (16) mit einer Rohbaurückwand des Fahrzeugs (10) verbunden ist.

5. Fahrzeugsitz nach einem der Ansprüche 2 bis 4,
wobei das schwenkbare Sitzelement in einer aufrechten Position und in einer im Wesentlichen waagerechten Position arretierbar ist.

6. Fahrzeugsitz nach Anspruch 5,
wobei das schwenkbare Sitzelement in seiner im Wesentlichen waagerechten Position zum Fahrzeuginnenraum geschwenkt ist.

7. Cabrioletfahrzeug (10) mit einem Fahrzeugsitz (11) nach einem der vorangehenden Ansprüche.

## Claims

1. A vehicle seat (11), in particular functioning as a rear vehicle seat (11) having a seat element (14) provided at the free upper end of the backrest (13),
**characterised in that**
the seat element (14) is pivotably linked to a backrest structure (16) of the vehicle seat (11) and
**in that** the seat element (14) acts, at the same time, as a headrest and as protection against rollover.

2. The vehicle seat according to Claim 1,
whereby the seat element (14) has a substantially U-shaped structural element (15).

3. The vehicle seat according to Claim 2,
whereby the backrest structure (16) includes at least two supporting pipes (17) which are parallel to each other and
whereby each free end of the structural element (15) is respectively allocated to one of the supporting pipes (17) of the backrest structure (16) such that a force transfer from the structural element (15) to the supporting pipes (17) of the backrest structure (16) is possible.

4. The vehicle seat according to one of Claims 2 or 3,
whereby the backrest structure (16) is joined to the vehicle structure, in particular by the backrest structure (16) being connected to a bodyshell rear wall of the vehicle (10).

5. The vehicle seat according to one of Claims 2 to 4,
whereby the pivotable seat element can be locked in an upright position and in a substantially horizontal position.

6. The vehicle seat according to Claim 5,
whereby the pivotable seat element is pivoted, in its substantially horizontal position, towards the vehicle interior space.

7. A cabriolet vehicle (10) with a vehicle seat (11) according to one of the preceding claims.

## Revendications

1. Siège de véhicule (11), en particulier servant de siège de véhicule (11) arrière, comprenant un élément de siège (14) prévu à l'extrémité supérieure libre du dossier (13),
**caractérisé en ce que** l'élément de siège (14) est articulé de façon à pivoter contre une structure de dossier (16) du siège du véhicule (11) et
**en ce que** l'élément de siège (14) a en même temps une fonction d'appui-tête et de système de protection contre les tonneaux.

2. Siège de véhicule selon la revendication 1, l'élément de siège (14) présentant un élément de structure (15) substantiellement en forme de U.

3. Siège de véhicule selon la revendication 2, la structure de dossier (16) comportant au moins deux tubes porteurs (17) parallèles l'un à l'autre et chaque extrémité libre de l'élément de structure (15) étant affectée respectivement à l'un des tubes porteurs (17) de la structure de dossier (16) de telle sorte qu'une dérivation de la force est possible de l'élément de structure (15) aux tubes porteurs (17) de la structure de dossier (16).

4. Siège de véhicule selon l'une des revendications 2 ou 3, la structure de dossier (16) étant reliée du côté de la structure du véhicule en étant notamment assemblée avec une paroi arrière de la coque du véhicule (10).

5. Siège de véhicule selon l'une des revendications 2 à 4, l'élément de siège pivotant pouvant être immobilisé dans une position verticale et dans une position substantiellement horizontale.

6. Siège de véhicule selon la revendication 5, l'élément de siège pivotant étant pivoté dans sa position substantiellement horizontale vers l'habitacle du véhicule.

7. Véhicule cabriolet (10) comportant un siège de véhicule (11) selon l'une des revendications précédentes.
